# EUROPEAN PATENT SPECIFICATION

(11) **EP 1 938 336 B1**
(45) Date of publication and mention of the grant of the patent: **13.01.2010**
(21) Application number: 06808859.0
(22) Date of filing: 19.09.2006
(51) Int. Cl.: G21C 1/00, G21C 1/02, G21C 1/03

(54) **NUCLEAR REACTOR, IN PARTICULAR A LIQUID-METAL-COOLED NUCLEAR REACTOR**
KERNREAKTOR, INSBESONDERE MIT FLÜSSIGEM METALL GEKÜHLTER KERNREAKTOR
REACTEUR NUCLEAIRE TEL QUE, NOTAMMENT, UN REACTEUR NUCLEAIRE A REFROIDISSEMENT PAR METAL LIQUIDE

(30) Priority: 21.09.2005 IT MI20051752
(43) Date of publication of application: 02.07.2008
(73) Proprietor: Ansaldo Nucleare S.p.A., 16152 Genova (IT)
(72) Inventor: CINOTTI, Luciano, 16036 RECCO (IT)
(74) Representative: Jorio, Paolo
(86) International application number: PCT/IB2006/002590
(87) International publication number: WO 2007/034290

(56) References cited:
- EP-A- 0 119 915
- EP-A1- 0 067 103
- EP-A2- 0 362 156
- FR-A1- 2 195 822
- FR-A1- 2 346 816

## Description

### TECHNICAL FIELD

The present invention relates to a nuclear reactor, in particular a liquid-metal-cooled nuclear reactor, preferably of the type with cylindrical inner vessel.

### BACKGROUND ART

It is known that in fast nuclear reactors, which have the heat exchangers within the casing ("outer vessel") of the reactor, there exists the need to separate the hot collector hydraulically from the cold collector to create a closed circuit for cooling the core.

In the solutions currently adopted, the hydraulic-separation structure is constituted by an appropriately shaped metal shell, also referred to as "inner vessel", having in general a complex shape and provided with a certain number of penetrations for housing pumps and heat exchangers.

The main heat exchangers for the power of the reactor are immersed for the most part in the hot collector, in which the heat exchangers of the auxiliary circuits for evacuation of the residual power are also housed.

The above solutions present a number of disadvantages, in particular in terms of rapidity of triggering of the natural circulation of the primary fluid for cooling the core, in terms of volume of the cold collector and hence thermal capacity and thermal inertia of the primary fluid, as well as in terms of structural complexity.

To overcome these drawbacks nuclear reactors have been proposed with a cylindrical inner vessel, of the type illustrated, for example, in the patent application No. UP-AT 0362156. The solution illustrated therein, like other similar known solutions that connect together in various ways the core of the reactor, the heat exchangers, and the circulation pumps, are not, however, in turn fully satisfactory in terms of overall dimensions and of constructional complexity, in particular on account of the encumbrance and structure of the systems for channelling the primary fluid.

### DISCLOSURE OF INVENTION

An aim of the present invention is consequently to provide a nuclear reactor that will overcome the drawbacks highlighted above of known solutions.

The present invention hence regards a nuclear reactor as defined in the annexed Claim 1 and, for its auxiliary characteristics, in the annexed dependent claims.

According to the invention, an integrated circulation and heat-exchange assembly is thus used, preferably formed by a circulation pump and two heat exchangers, which are hydraulically and mechanically coupled together to form an extremely compact unitary structure.

In this way, it is possible to achieve all the advantages associated to the use of a cylindrical inner vessel, but with an added significant reduction (indicatively of approximately 30%) of the overall volume of the reactor and, hence, of the amount of primary fluid required for operation of the reactor. In fact, the system of fluid tightness between the hot collector and the cold collector is far from cumbersome, given that it is limited to the area of the inlet of the integrated assembly and does not have to be extended also to the areas of penetration of the heat exchangers through the inner vessel. In addition, the use of an integrated assembly that combines a number of components (the pump and one or more heat exchangers) entails a smaller occupation of space at the level of the penetrations on the roof of the reactor as compared to the use of independent components (pumps and heat exchangers).
The solution according to the invention then enables a simple and fast removal of the integrated assembly from the reactor in the event of need.

### BRIEF DESCRIPTION OF THE DRAWINGS

The invention is further described in the following nonlimiting example of embodiment, with reference to the figures of the annexed drawings, wherein:
- Figure 1 is a sectioned schematic view of a nuclear reactor according to the invention;
- Figure 2 is a schematic plan view of the reactor of Figure 1, with parts removed for reasons of clarity;
- Figure 3 is a front schematic view of an integrated circulation and heat-exchange assembly forming part of the reactor of Figure 1;
- Figure 4 is a schematic view in partial cross section of the integrated assembly of Figure 3; and
- Figure 5 is a view sectioned according to the surface of trace V-V in Figure 4.

### BEST MODE FOR CARRYING OUT THE INVENTION

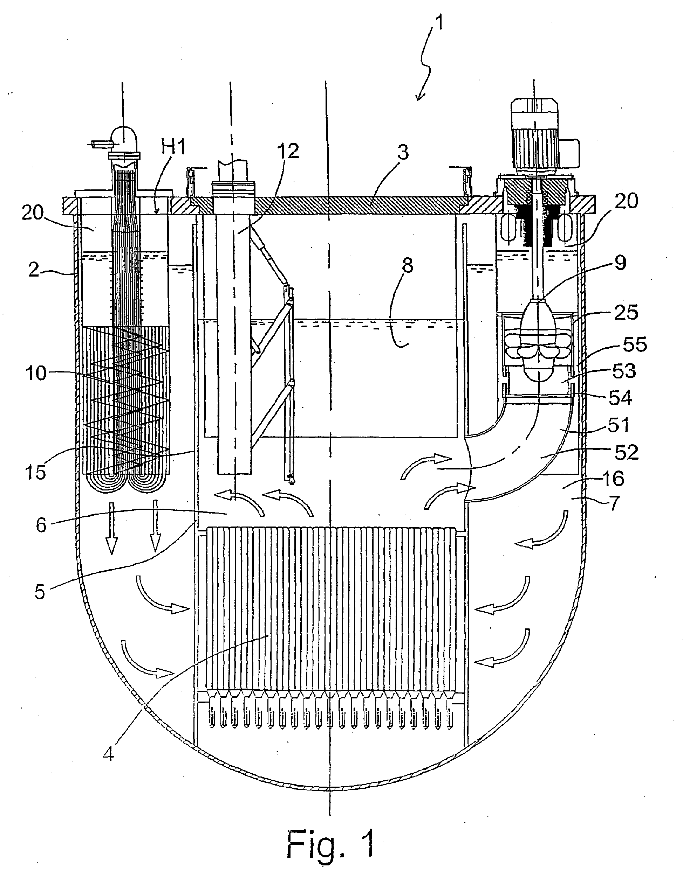

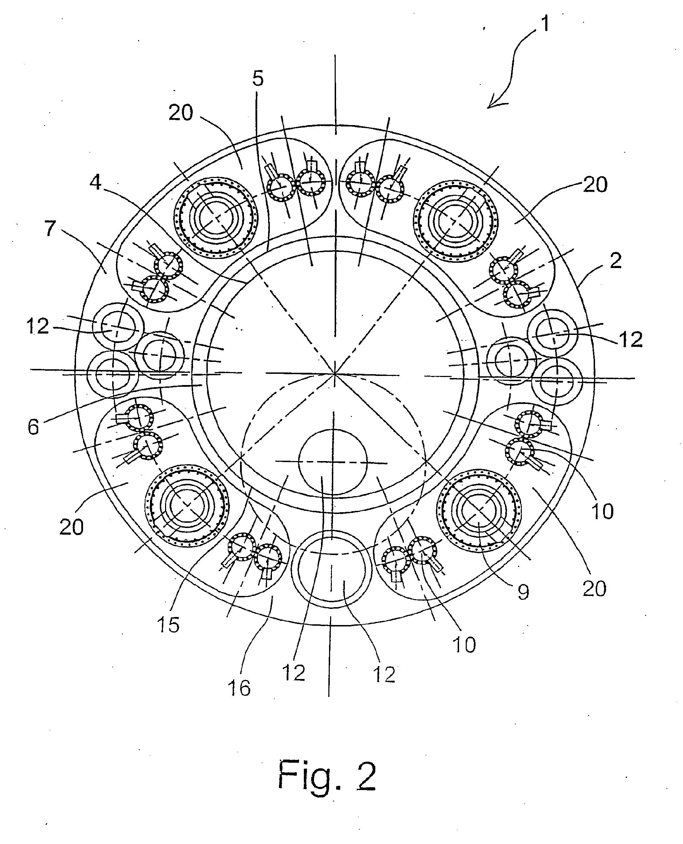

With reference to Figures 1 and 2, a nuclear reactor 1 comprises a casing or outer vessel 2 covered by a roof 3 and containing inside it a core 4 and a separation structure 5, defining a hot collector 6 and a cold collector 7, circulating in which is a primary fluid 8 for cooling the core 4. Housed inside the outer vessel 2 are then pumps 9 for circulation of the primary fluid 8 and heat exchangers 10, preferably steam generators, which are traversed by the primary fluid 8 and transfer the power generated in the core 4 to a secondary coolant circulating in a secondary external circuit (known and not illustrated).

Preferably, the primary fluid 8 is a liquid metal and in particular a heavy liquid metal, for example lead or lead-bismuth eutectic.

Housed within the outer vessel 2 are then various auxiliary devices 12, amongst which, for example, machines for transfer of the fuel, structures for supporting the.instrumentation and the control bars, auxiliary heat exchangers for removal of the residual power, etc., illustrated only schematically and not described in detail for reasons of simplicity in so far as they are known and do not pertain to the present invention.

The separation structure 5 comprises a substantially cylindrical inner vessel 15, set above the core 4. The hot collector 6 is defined within the inner vessel 15 and is hence positioned centrally above the core 4. The cold collector 7 is defined by an annular region 16 comprised between the outer vessel 2 and the inner vessel 15, and is consequently set around the hot collector 6.

The reactor 1 comprises one or, preferably, more integrated circulation and heat-exchange assemblies 20, placed entirely in the cold collector 7. In the example illustrated in the annexed figures, the reactor 1 includes a plurality of (four) integrated assemblies 20, spaced apart from one another circumferentially around the inner vessel 15.

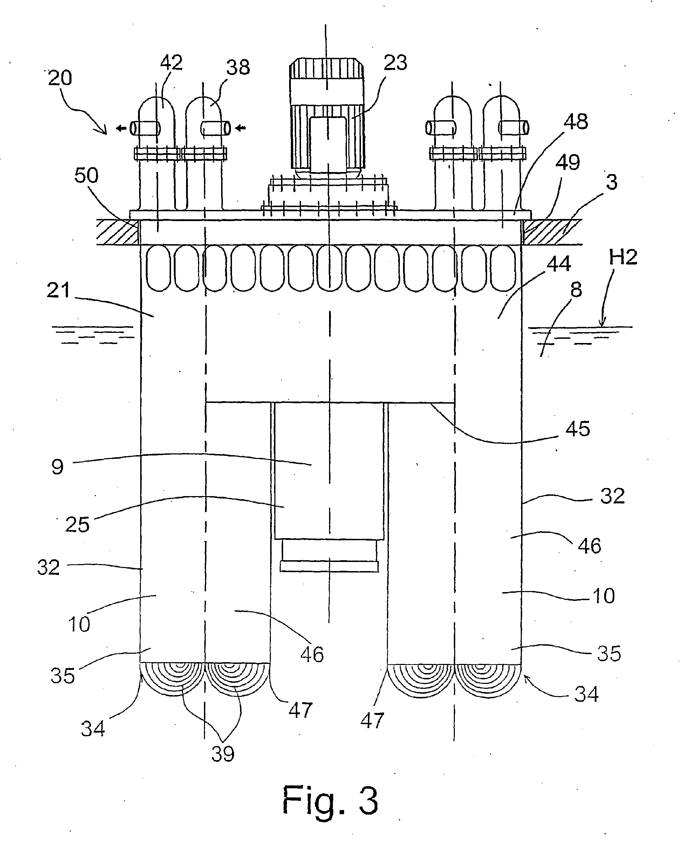

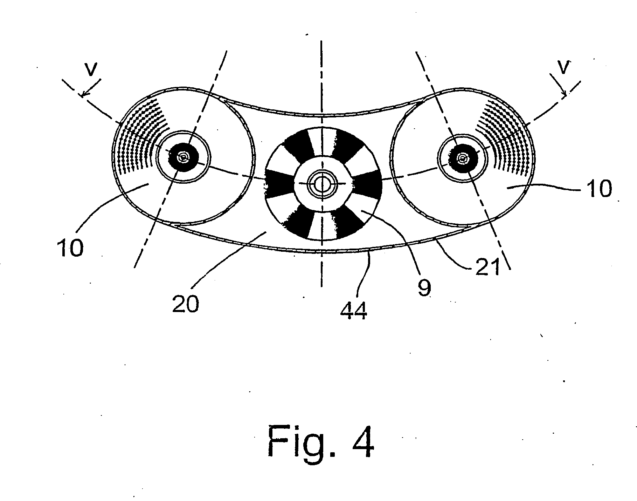

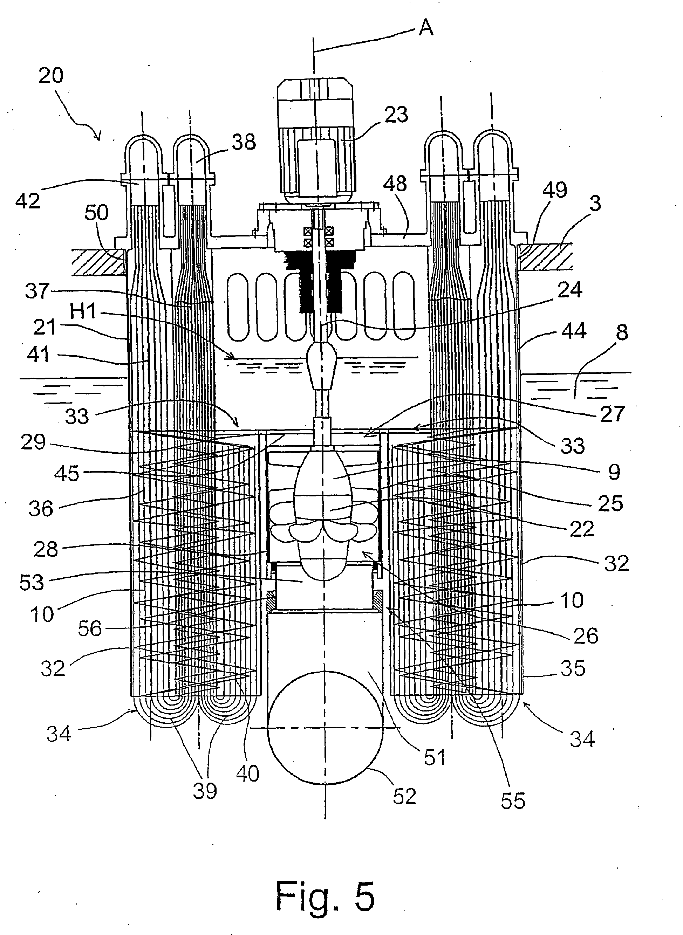

With reference to Figures 3-5, each integrated assembly 20 comprises a pump 9 for circulation of the primary fluid 8, one or more heat exchangers 10 traversed by the primary fluid 8 and set alongside the pump 9, and a conveying structure 21, all of which are fixedly connected to one another to form a single mechanical structure. In the preferred embodiment illustrated, each integrated assembly 20 comprises a pump 9 and two heat exchangers 10 set on opposite sides of the pump 9. The pump 9 and the heat exchangers 10 extend along respective substantially vertical and parallel axes.

The pump 9 has an impeller 22, driven by a motor 23 via a shaft 24 (all of said components being substantially known). The impeller 22 is housed in a substantially cylindrical tubular element 25 having a substantially vertical axis, which has an inlet 26 and an outlet 27 for the primary fluid 8 defined by respective axially opposite end edges 28, 29 of the tubular element 25.

Each of the heat exchangers 10 has a substantially cylindrical shell 32, which is internally traversed by the primary fluid 8 and has an inlet section 33 for inlet of the primary fluid 8, communicating via the conveying structure 21 with the outlet 27 of the pump 9, and an outlet section 34, set at a lower end 35 of the shell 32.

The heat exchangers 10 can be built according to different known solutions. In the example illustrated, each heat exchanger 10 has a nest of tubes 36 for passage of the secondary coolant, which have respective delivery stretches 37, which are substantially rectilinear and traverse vertically and centrally the heat exchanger 10 and are connected to an inlet collector 38 for inlet of the secondary coolant, respective curved joint portions 39, respective helical main stretches 40, and respective substantially rectilinear return stretches 41 connected to an outlet collector 42. It remains in any case understood that the geometry of the heat exchangers 10 can differ from the one described herein purely by way of example.

The conveying structure 21 comprises a casing box 44 that connects hydraulically the outlet 27 of the pump 9 with the inlet sections 33 of the heat exchangers 10. The casing box 44 has, in plan view, a curved shape - in particular, a substantially bean shape - so as to be housed in the annular region 16 and is closed at the bottom by an end wall 45, passing through which are the pump 9 and the heat exchangers 10. In particular, projecting downwards from the end wall 45 are the tubular element 25 of the pump 9 and respective terminal portions 46 of the heat exchangers 10, provided at the bottom with openings 47 defining the outlet sections 34. The outlet 27 of the pump 9 communicates with the inside of the casing box 44, and the inlet sections 33 of the heat exchangers 10 are formed within the casing box 44 in a position corresponding to the end wall 45. At the top, the casing box 44 has a covering plate 48, set on top of which are the motor 23 and the inlet and outlet collectors 38, 42. A top area of the casing box 44 is moreover provided with outflow openings 49, which are formed at a greater height than the level of the primary fluid 8 in the casing box 44 in conditions of normal operation of the reactor 1 and which have the function of enabling overflow of the primary fluid 8 from the casing box 44 into the cold collector 7 in the case where the level rises on account of failure or malfunctioning of the heat exchangers.

The integrated assembly 20 is supported by and hanged from the roof 3 of the reactor and projects vertically downwards into the cold collector 7. In particular, the casing box 44 is set through a window 50 formed in the roof 3, and the plate 48 is engaged in a releasable way to the roof 3.

Each integrated assembly 20 constitutes a single mechanical structure having an inlet 26 for the hot primary fluid 8 coming from the hot collector 6, and two outlet sections 34 for the cold primary fluid 8 that flows out into the cold collector 7.

Each integrated assembly 20 is hydraulically connected to the hot collector 6 via a connecting structure 51 comprising a pipe 52, fixed to the inner vessel 15, and a connecting element 53, which is fixed to the end edge 28 and hence communicates with the inlet 26 of the pump 9. The pipe 52 projects radially from a side wall of the inner vessel 15 and is curved upwards and elbow-shaped, having a substantially horizontal free end 54. The connecting element 53 extends along a vertical axis A, has an axial symmetry about said axis A and is coupled to the end edge 28 of the tubular element 25 and to the free end 54 of the pipe 52. In particular, the connecting element 53 is provided with a releasable coupling system 55 co-operating with the free end 54 along the axis A so that the integrated assembly 20 can be removed vertically from the reactor 1. In the case of removal of the integrated assembly 20 from the reactor 1, the connecting element 53 remains mechanically connected to the tubular element 25 of the pump 9, whilst the pipe 52 remains anchored to the inner vessel 15.

The connecting element 53 is moreover provided with a mechanical sealing system 56, which co-operates with the free end 54 of the pipe 52 and possibly with the end edge 28 of the tubular element 25.

Both the releasable-coupling system 55 and the mechanical sealing system 56 can be chosen from amongst the systems known in the sector. For example, a system with compression rings may be adopted.

The connecting element 53 is moreover a substantially flexible element in such a way as to compensate for any thermal expansion between the opposite axial ends of the integrated assembly 20. The flexibility of the connecting element 53 can be obtained adopting a solution known in the sector, for example via metal bellows.

It may be noted that in this way fluid-sealing systems are required only at the inlets 26 of the pumps 9, which have relatively small diameters, and no additional sealing systems are necessary on the individual heat exchangers 10, as is instead the case of known solutions.

In conditions of normal operation of the reactor 1, the primary fluid 8 is at a level H1 inside the integrated assemblies 20, in particular in the casing box 44, at a level H2, lower than the level H1, in the cold collector 7, and at an even lower level H3, lower than the level H2, in the hot collector 6.

In normal conditions of operation, the primary fluid 8 circulates through the core 4, is sucked by the pumps 9 into the connecting structures 51 and then traverses the tubular elements 25 in a direction substantially vertical upwards, filling the casing box 44 up to the level H1.

In each casing box 44, the primary fluid 8 flows laterally, in a substantially horizontal direction, and divides into opposite flows to reach the inlet sections 33 of the heat exchangers 10. The primary fluid 8 then traverses in a substantially vertical direction downwards the heat exchangers 10, yielding heat to the secondary coolant, and then flows out cooled from the outlet sections 34 into the cold collector 7, from which it then traverses the core 4 again.

The inlet sections 33 of the heat exchangers 10 are situated at a level sufficiently lower than the free surface of the primary fluid 8 in the casing box 44 as not to cause the primary fluid 8 to draw along with it gases taken from the ceiling of the reactor 1.

Finally, it remains understood that modifications and variations may be made to the nuclear reactor described and illustrated herein, without thereby departing from the scope of the annexed claims.

## Claims

1. A nuclear reactor (1), in particular a liquid-metal-cooled nuclear reactor, having a hot collector (6) over a core (4) and a cold collector (7) surrounding the hot collector, separated by a separation structure (5) and circulating in which is a primary fluid (8) for cooling the core (4); the reactor being **characterized by** comprising at least one integrated circulation and heat-exchange assembly (20), comprising a pump (9), at least one heat exchanger (10), and a conveying structure (21), through which the primary fluid (8) passes from the pump to the heat exchanger, which are fixedly connected to one another to form a unitary structure; the integrated assembly being housed entirely in the cold collector (7) and having an inlet (26) connected to the hot collector (6) and at least one outlet section (34) in the cold collector (7).

2. The reactor according to Claim 1, **characterized in that** said at least one heat exchanger (10) is set laterally with respect to the pump (9).

3. The reactor according to Claim 1 or Claim 2, **characterized in that** the integrated assembly (20) comprises a pump (9) and two heat exchangers (10) set on opposite sides of the pump.

4. The reactor according to any one of the preceding claims, **characterized in that** the conveying structure (21) comprises a casing box (44), which contains a primary fluid (8) up to a pre-set level (H1) and connects the pump (9) to the heat exchanger/heat exchangers (10).

5. The reactor according to Claim 4, **characterized in that** the casing box (44) has outflow openings (49) in a top area and that are set at a height greater than said level (H1).

6. The reactor according to Claim 4 or Claim 5, **characterized in that** the casing box (44) has, in plan view, a curved shape, substantially a bean shape, to be housed in an annular region (16) of the cold collector (7).

7. The reactor according to any one of the preceding claims, **characterized in that** the separation structure (5) is defined by a substantially cylindrical inner vessel (15) set above the core (4).

8. The reactor according to any one of the preceding claims, **characterized in that** the pump (9) has an inlet (26) and an outlet (27) for the primary fluid (8) and the integrated assembly (20) is hydraulically connected to the hot collector (6) via a connecting structure (51) communicating with the inlet (26) of the pump (9).

9. The reactor according to Claim 8, **characterized in that** the connecting structure (51) is a flexible structure.

10. The reactor according to Claim 8 or Claim 9, **characterized in that** the connecting structure (51) comprises a pipe (52), fixed to the separation structure (5), and a connecting element (53), which extends along a vertical axis (A) and is coupled in a releasable way to a free end (54) of the pipe (52) along the axis (A) so that the integrated assembly (20) can be removed vertically from the reactor (1).

11. The reactor according to Claim 10, **characterized in that** the connecting element (53) is an element having an axial symmetry about said axis (A).

12. The reactor according to Claim 10 or Claim 11,
**characterized in that** the connecting element (53) is provided with a mechanical sealing system (56) co-operating with the free end (54) of the pipe (52).

13. The reactor according to any one of the preceding claims, **characterized in that** the primary fluid (8) is sucked substantially vertically upwards into the pump (9), flows substantially horizontally in the conveying structure (21) and traverses the heat exchanger/heat exchangers (10) substantially vertically downwards.

14. The reactor according to any one of the preceding claims, **characterized in that** in normal operation of the reactor (1) the primary fluid (8) is at a first level (H1) within the integrated assembly (20), at a second level (H2) lower than the first level (H1) in the cold collector (7), and at a third level (H3) lower than the second level (H2) in the hot collector (6).

## Patentansprüche

1. Nuklearreaktor (1), insbesondere ein mit flüssigem Metall gekühlter Nuklearreaktor, mit einem Heißsammler (6) über einem Kern (4) und einem Kaltsammler (7), der den Heißsammler umgibt, durch eine Trennstruktur (5) getrennt ist und in dem ein Primärfluid (8) zur Kühlung des Kerns (4) zirkuliert, **gekennzeichnet durch** mindestens ein integriertes Umwälz- und Wärme-Tauscherbauteil (20), das eine Pumpe (9), wenigstens einen Wärmetauscher (10) und eine Förderstruktur (21) aufweist, **durch** die das Primärfluid (8) von der Pumpe zum Wärmetauscher strömt, die aneinander unter Bildung einer einheitlichen Struktur fest verbunden sind, wobei das integrierte Bauteil vollständig in dem Kaltsammler (7) angeordnet ist und einen Einlass (26), der mit dem Heißsammler (6) verbunden ist, und wenigstens einen Auslassbereich (34) im Kaltsammler (7) aufweist.

2. Reaktor nach Anspruch 1, **dadurch gekennzeichnet, dass** mindestens ein Wärmetauscher (10) seitlich zur Pumpe (9) angeordnet ist.

3. Reaktor nach Anspruch 1 oder 2, **dadurch gekennzeichnet, dass** das integrierte Bauteil (20) eine Pumpe (9) und zwei Wärmetauscher (10) aufweist, die an den entgegengesetzten Seiten der Pumpe angeordnet sind.

4. Reaktor nach jedem der vorhergehenden Ansprüche, **dadurch gekennzeichnet, dass** die Förderstruktur (21) ein Gehäuse (44) aufweist, das ein Primärfluid (8) bis zu einem vorbestimmten Pegel (H1) enthält und die Pumpe (9) mit dem bzw. den Wärrnetauscher(n) (10) verbindet.

5. Reaktor nach Anspruch 4, **dadurch gekennzeichnet, dass** das Gehäuse (44) Ausflussöffnungen (49) in einem oberen Bereich aufweist und dass sie in ihrer Höhe größer angeordnet sind als der Pegel (H1).

6. Reaktor nach Anspruch 4 oder 5, **dadurch gekennzeichnet, dass** das Gehäuse (44) in der Draufsicht eine gekrümmte Form, insbesondere eine Bohnenform aufweist, wobei es in einem ringförmigen Bereich (16) des Kaltsammlers (7) angeordnet ist.

7. Reaktor nach jedem der vorhergehenden Ansprüche, **dadurch gekennzeichnet, dass** die Trennstruktur (5) durch ein im Wesentlichen zylindrisches Gefäß (15) definiert ist, das oberhalb des Kerns (4) angeordnet ist.

8. Reaktor nach jedem der vorhergehenden Ansprüche, **dadurch gekennzeichnet, dass** die Pumpe (9) einen Einlass (26) und einen Auslass (27) für das Primärfluid (8) und das integrierte Bauteil (20) in Strömungsverbindung mit dem Heißsammler (6) mittels einer Verbindungsstruktur (51) steht, die mit dem Einlass (26) der Pumpe (9) in Verbindung ist.

9. Reaktor nach Anspruch 8, **dadurch gekennzeichnet, dass** die Verbindungsstruktur (51) eine flexible Struktur ist.

10. Reaktor nach Anspruch 8 oder 9, **dadurch gekennzeichnet, dass** die Verbindungsstruktur (51) ein Rohr (52), das an der Trennstruktur (5) befestigt ist, und ein Verbindungselement (53) aufweist, das sich entlang einer senkrechten Achse (A) erstreckt und in einer lösbaren Anordnung am freien Ende (54) des Rohrs (52) entlang der Achse (A) so angekoppelt ist, dass das integrierte Bauteil (20) senkrecht vom Reaktor (1) entfernt werden kann.

11. Reaktor nach Anspruch 10, **dadurch gekennzeichnet, dass** das Verbindungselement (53) ein Element mit einer axialen Symmetrie um die Achse (A) ist.

12. Reaktor nach Anspruch 10 oder 11, **dadurch gekennzeichnet, dass** das Verbindungselement (53) mit einem mechanischen Dichtungssystem (56) versehen ist, das mit dem freien Ende (54) des Rohrs (52) zusammenwirkt.

13. Reaktor nach jedem der vorhergehenden Ansprüche, **dadurch gekennzeichnet, dass** das Primärfluid (8) im Wesentlichen senkrecht nach oben in die Pumpe (9) angesaugt wird, im Wesentlichen waagerecht in der Förderstruktur (21) fließt und den bzw. die Wärmetauscher (10) im Wesentlichen senkrecht nach unten durchquert.

14. Reaktor nach jedem der vorhergehenden Ansprüche, **dadurch gekennzeichnet, dass** im Normalbetrieb des Reaktors (1) das Primärfluid (8) sich an einem ersten Pegel (H1) innerhalb des integrierten Bauteils (20), einem zweiten Pegel (H2), der niedriger als der erste Pegel (H1) ist, im Kaltsammler (7) und an einem dritten Pegel (H3), der niedriger ist als der zweite Pegel (H2), in dem Heißsammler (6) befindet.

## Revendications

1. Réacteur nucléaire (1), notamment un réacteur nucléaire refroidi par un métal liquide, ayant un collecteur chaud (6) au dessus d'un coeur (4) et un collecteur froid (7) entourant le collecteur chaud, séparés au moyen d'une structure de séparation (5) et dans lequel circule un fluide primaire (8) pour refroidir le coeur (4) ; le réacteur étant **caractérisé par le fait qu'**il comprend au moins un ensemble intégré de circulation et d'échange de chaleur (20), comprenant une pompe (9), au moins un échangeur thermique (10), et une structure de transport (21) à travers laquelle passe le fluide primaire (8) de la pompe vers l'échangeur thermique, qui sont reliés de façon fixe l'un à l'autre pour constituer une structure unitaire ; l'ensemble intégré étant logé totalement à l'intérieur du collecteur froid (7) et présentant une entrée (26) reliée au collecteur chaud (6) et au moins une section de sortie (34) dans le collecteur froid (7).

2. Le réacteur selon la revendication 1, **caractérisé en ce que** ledit au moins un échangeur thermique (10) est disposé latéralement par rapport à la pompe (9).

3. Le réacteur selon la revendication 1 ou la revendication 2, **caractérisé en ce que** l'ensemble intégré (20) comprend une pompe (9) et deux échangeurs thermique (10) disposés à des côtés opposés de la pompe.

4. Le réacteur selon l'une quelconque des revendications précédentes, **caractérisé en ce que** la structure de transport (21) comprend un récipient formant enveloppe (44) qui contient un fluide primaire (8) jusqu'à un niveau pré-réglé (H1) et qui relie la pompe (9) à l'échangeur ou les échangeurs thermique (10).

5. Le réacteur selon la revendication 4, **caractérisé en ce que** le récipient formant enveloppe (44) présente des ouvertures de sortie (49) dans une zone supérieure et qui sont situés à une hauteur supérieure à celle dudit niveau (H1).

6. Le réacteur selon la revendication 4 ou la revendications 5, **caractérisé en ce que** le récipient formant enveloppe (44) présente, en vue de dessus, une forme incurvée, sensiblement à forme de fève, pour être logé dans une zone annulaires (16) du collecteur froid (7).

7. Le réacteur selon l'une quelconque des revendications précédentes, **caractérisé en ce que** la structure de séparation (5) est définie par un récipient interne sensiblement cylindrique (15) placé au-dessus du coeur (4).

8. Le réacteur selon l'une quelconque des revendications précédentes, **caractérisé en ce que** la pompe (9) présente une entrée (26) et une sortie (27) pour le fluide primaire (8) et l'ensemble intégré (20) est relié hydrauliquement au collecteur chaud (6) via une structure de raccordement (51) en communication avec l'entrée (26) de la pompe (9).

9. Le réacteur selon la revendication 8, **caractérisé en ce que** la structure de raccordement (51) est une structure flexible.

10. Le réacteur selon la revendication 8 ou la revendication 9, **caractérisé en ce que** la structure de raccordement (51) comprend un tuyau (52), fixé à la structure de séparation (5), et un élément de raccordement (53), qui s'étend le long d'un axe vertical (A) et est couplé d'une façon amovible à une extrémité libre (54) du tuyau (52) le long de l'axe (A) de sorte que l'ensemble intégré (20) puisse être enlevé verticalement du réacteur (1).

11. Le réacteur selon la revendication 10, **caractérisé en ce que** l'élément de raccordement (53) est un élément présentant une symétrie axiale autour dudit axe (A).

12. Le réacteur selon la revendication 10 ou la revendication 11, **caractérisé en ce que** l'élément de raccordement (53) est muni d'un système d'étanchéité mécanique (56) qui coopère avec l'extrémité libre (54) du tuyau (52).

13. Le réacteur selon l'une quelconque des revendications précédentes, **caractérisé en ce que** le fluide primaire (8) est aspiré sensiblement verticalement vers le haut dans la pompe (9), s'écoule sensiblement horizontalement au sein de la structure de transport (21) et traverse le ou les et échangeur(s) thermique (10) sensiblement verticalement vers le bas.

14. Le réacteur selon l'une quelconque des revendications précédentes, **caractérisé en ce que**, en fonctionnement normal du réacteur (1) le fluide primaire (8) se trouve à un premier niveau (H1) à l'intérieur de l'ensemble intégré (20), à un deuxième niveau (H2) plus bas que le premier niveau (H1) dans le collecteur froid (7), et à un troisième niveau (H3) inférieure au deuxième niveau (H2) dans le collecteur chaud (6).
